# EUROPÄISCHE PATENTSCHRIFT

(11) **EP 0 930 197 B1**
(45) Veröffentlichungstag und Bekanntmachung des Hinweises auf die Patenterteilung: **30.10.2002**
(21) Anmeldenummer: 98100537.4
(22) Anmeldetag: 14.01.1998
(51) Int. Cl.: B60P 1/44, B60Q 1/30

(54) **Ladebordwandsystem mit einer fussbedienbaren Schalteinrichtung**
Loading tailgate system with foot-operated control
Système de hayon élévateur avec commande à pied

(43) Veröffentlichungstag der Anmeldung: 21.07.1999
(73) Patentinhaber: Sörensen Hydraulik, Zweigniederlassung, Ulfborg, Filial af Sörensen Hydraulik GmbH, Tyskland, 6990 Ulfborg (DK)
(72) Erfinder: Sörensen Uwe, 21031 Hamburg (DE)
(74) Vertreter: Niedmers, Ole, Dipl.-Phys.

(56) Entgegenhaltungen:
- DE-A- 3 625 057
- DE-U- 29 607 785

## Beschreibung

Die Erfindung betrifft ein Ladebordwandsystem zum Gebrauch an Fahrzeugen, insbesondere Lastkraftfahrzeugen, umfassend ein Hub- und Klapptragwerk, eine im wesentlichen plattenförmige Ladebordwand zum Heben und Absenken einer Last und ggf. zum Verschließen und/oder Begrenzen eines Stauraumes des Fahrzeuges sowie wenigstens eine Hubeinrichtung zum Heben und Senken der Ladebordwand sowie ggf. eine Einrichtung zum Verschwenken der Ladebordwand von der Horizontalen in die Vertikale und umgekehrt, wobei auf der Ladebordwand wenigstens eine fußbedienbare Schalteinrichtung zum Ein- und Ausschalten des Hebens und Senkens der Ladebordwand angeordnet ist.

Ladebordwandsysteme dieser oder ähnlicher Art sind stark verbreitet und finden überall dort Anwendung, wo Lasten beispielsweise von einer höheren Ebene, wie sie beispielsweise die Ladefläche eines Lastkraftwagens darstellt, auf eine niedrigere Ebene, beispielsweise die Ebene, auf der der Lastwagen mit seinen Rädern steht, verbracht bzw. abgesenkt werden müssen und umgekehrt, um einen Belade- und Entladevorgang mit Waren durchführen zu können. Ein Ladebordwandsystem dieser Art ist beispielsweise aus der EP-A-0 808 747 bekannt. Der Hinweis auf dieses bekannte Ladebordwandsystem soll aber keineswegs präjudizierend und einschränkend in bezug auf den Anmeldungsgegenstand wirken. Deshalb sei noch einmal klargestellt, daß das in dem voraufgeführten Dokument beschriebene Ladebordwandsystem lediglich eine mögliche Art darstellt, bei der die erfindungsgemäße Ausgestaltung des Ladebordwandsystems Anwendung finden kann. Weitere Systeme entsprechend den Merkmalen des Oberbegriffes des unabhängigen Anspruchs 1 sind z.B. aus DE-U-2 960 785 und DE-A-3 625 057 bekannt.

Auf der Ladebordwand befindet sich regelmäßig eine Schalteinrichtung, die in den allermeisten Fällen im seitlichen Bereich der Ladebordwand angeordnet ist. Diese Schalteinrichtung wird, nachdem die Ladebordwand durch entsprechende Steuerung in die Horizontale geklappt worden ist und auf den Untergrund abgesenkt worden ist, auf dem auch regelmäßig das Fahrzeug steht, von einer Bedienungsperson durch entsprechende Beaufschlagung mit dem Fuß bedient. Mit dieser Schalteinrichtung ist durch entsprechende Beaufschlagung mit den Füßen durch die Bedienungsperson ein Heben und Senken der Ladebordwand steuerbar. Im Stand der Technik sind eine Vielzahl von Steuerungsmöglichkeiten bekannt, die eine, zwei, drei und vier Schalteinrichtungen dieser Art benötigen, was im wesentlichen seinen Grund darin hat, daß bestimmte technische und/oder gesetzliche Vorschriften eine Bedienung der Ladebordwand nur dann ermöglichen sollen, wenn beispielsweise die Bedienungsperson zwei Schalteinrichtungen dieser Art gleichzeitig mit den Füßen bedient. Diese Einschränkung dient der Sicherheit vor Bedienungsfehlern, um Personen und auch die mit der Ladebordwand zu hebenden und abzusenkenden Waren nicht zu Schaden kommen zu lassen.

Die Erfindung geht von wenigstens einer auf der Ladebordwand angeordneten fußbedienbaren Schalteinrichtung aus, sie umfaßt aber auch solche Ausgestaltungen, bei denen mehrere fußbedienbare Schalteinrichtungen der vorbeschriebenen Art vorgesehen sind.

In der allermeisten Fällen weisen die Ladebordwände der hier beschriebenen Art Leuchteinrichtungen auf, die regelmäßig an den beiden vorstehenden Eckbereichen angeordnet sind und den nachfolgenden Verkehr darauf hinweisen sollen, daß hier eine in die Horizontale abgeklappte Ladebordwand vorhanden ist, die, was jeder weiß, an sich ein sehr gefährliches Objekt sein kann, wenn dieses vom nachfolgenden Verkehr nicht erkannt wird. Die in den Eckbereichen normalerweise vorhandenen Leuchteinrichtungen, die entweder im Dauerbetrieb leuchten oder ggf. getaktet leuchten, haben im Vergleich zu früher verwendeten, unbeleuchteten Ladebordwänden schon ein Unfallrisiko für den nachfolgenden Verkehr erheblich dezimiert, da die potentielle Gefahrenquelle, die die horizontal ausgerichtete Ladebordwand darstellt, gut erkannt wird.

Es versteht sich von selbst, daß diese Beleuchtungseinrichtungen jedenfalls eine Fehlbedienung der Ladebordwand durch eine Bedienungsperson nicht ausschließen können, zumal auch die Hauptabstrahlrichtung der in den Eckbereichen angeordneten Leuchteinrichtungen, die als Warneinrichtungen für den nachfolgenden Verkehr dienen, im wesentlichen von der horizontal postierten Ladebordwand nach hinten wegstrahlen. Es ist aber wiederholt vorgekommen, daß auch bei den ausgeklügeltsten Steuerungen für das Heben und Senken der Ladebordwand mittels Fußbetätigung Fehlbedienungen durch die Bedienungsperson vorgenommen worden sind mit der Folge von beträchtlichen Verletzungen von Personen und auch einer beträchtlichen Beschädigung der damit zu hebenden bzw. zu senkenden Lasten.

Es ist somit Aufgabe der vorliegenden Erfindung, ein Ladebordwandsystem der eingangs genannten Art zu schaffen, bei dem einerseits für die Bedienungsperson gegenüber den bekannten Systemen noch eine größere Sicherheit vor Fehlbedienungen geschaffen wird, mit dem gewährleistet ist, daß auch Personen zusätzlich gewarnt und somit vor Beeinträchtigungen geschützt werden können, das einfach im Aufbau und kostengünstig herstellbar ist und mit dem es möglich ist, bekannte Ladebordwandsysteme ohne großen Aufwand nachzurüsten, um sie auf den neuesten Sicherheitsstandard zu bringen.

Gelöst wird die Aufgabe gemäß der Erfindung dadurch, daß die Schalteinrichtung mit einer Beleuchtungseinrichtung versehen ist.

Der Vorteil der erfindungsgemäßen Lösung besteht im wesentlichen darin, daß die Bedienungsperson auch bei ungünstigen Lichtverhältnissen den fußbedienbaren Schalter auf der Ladeplattform erkennen kann und demzufolge ordnungsgemäß betätigen kann, ohne daß es zu Fehlbetätigungen kommt, insbesondere dann, wenn eine Mehrzahl dieser fußbetätigbaren Schalteinrichtungen auf der Ladeplattform angeordnet sind. Durch die Beleuchtung der Schalteinrichtung kann die Bedienungsperson sofort den einen Schalter bzw. die Mehrzahl der Schalter erkennen und hat aufgrund der Beleuchtung sofort die Möglichkeit, bei einer Mehrzahl von vorgesehenen Schalteinrichtungen auch den bzw. die richtigen auszuwählen, um das Heben bzw. Senken der Ladeplattform auszulösen. Für außenstehende Dritte ist die Beleuchtung der Schalteinrichtung ein zusätzliches Warnsignal, daß sich hier eine Ladebordwand in horizontaler Stellung befindet, so daß auch höchste Aufmerksamkeit geboten ist. Schließlich ist es erfindungsgemäß von Vorteil, daß bisher verwendete Schalteinrichtungen durch entsprechende Nachrüstung auf einfache Weise an den neuesten Stand der Technik angepaßt werden können, so daß eine Erhöhung der allgemeinen Verkehrssicherheit, wie angestrebt, erreicht wird.

Bei einer vorteilhaften Ausgestaltung des Ladebordwandsystems weist die Schalteinrichtung einen kragenförmigen Befestigungsflansch auf, mit dem die Schalteinrichtung auf der Ladebordwand befestigbar ist, wobei der Befestigungsflansch wenigstens teilweise lichtransparent ausgebildet ist. Im Handel erhältliche fußbedienbare Schalteinrichtungen können ähnlich ausgebildet sein, wie vorangehend beschrieben. Dabei ist aber der kragenförmige Befestigungsflansch entweder aus Metall oder Kunststoff hergestellt und dient ausschließlich der Befestigung der Schalteinrichtung auf der Ladebordwand und regelmäßig auch zur Aufnahme eines elastomeren Schaltorgans, das die von einer Bedienungsperson mittels des Fußes ausgeübte Kraft zur Betätigung der eigentlichen Schalteinrichtung auf diese überträgt.

In der Schalteinrichtung selbst ist ein in bezug auf Aufbau und Funktion an sich bekannter Schalter, regelmäßig in Form eines sogenannten Micro-Schalters, vorhanden. Der Befestigungsflansch ist regelmäßig kreisförmig ausgebildet und weist im Querschnitt eine konische Form auf. Erfindungsgemäß ist dieser Befestigungsflansch nunmehr wenigstens teilweise lichttransparent ausgebildet, so daß dieser, durch die Beleuchtungseinrichtung auf geeignete Weise mit Licht beaufschlagt, bei kreisförmiger Ausgestaltung des Befestigungsflanschs, kreis- bzw. ringförmig Licht abgibt, was bei horizontal verschwenkter Ladebordwand von allen Seiten gut erkannt werden kann. Ein derart ausgebildeter Befestigungsflansch wirkt beispielsweise nicht nur als Lichtabgabemittel, sondern auch als Lichtleiter.

Grundsätzlich kann als Leuchtmittel der Beleuchtungseinrichtung jedes geeignete Leuchtmittel verwendet werden, im einfachsten Falle vorzugsweise eine elektrische Glühbirne, wie sie auch bei anderen Beleuchtungseinrichtungen des Fahrzeugs, an dem das Ladebordwandsystem befestigt ist, verwendet wird, beispielsweise in Form einer normalen Glühbirne, wie sie bei der fahrzeugeigenen Beleuchtung verwendet wird. Eine derartige Ausgestaltung des Ladebordwandsystems hat zudem den Vorteil, daß bei Ausfall der Beleuchtungseinrichtung bzw. des Leuchtmittels dieses sehr schnell gegen am Fahrzeug normalerweise im Ersatzteilvorrat vorhandene Leuchtmittel ausgetauscht werden kann und so auf einfache Weise schnell die volle Funktionsfähigkeit wieder hergestellt werden kann. Zudem hat diese Ausgestaltung den Vorteil, daß in bezug auf die Versorgungsspannung des Leuchtmittels auch hierfür auf das elektrische Bordversorgungsnetz zurückgegriffen werden kann, ohne daß gesonderte Spannungsversorgungsmittel und -einrichtungen vorgesehen werden müssen. Es versteht sich von selbst, daß pro kragenförmigem Befestigungsflansch bzw. generell pro Beleuchtungseinrichtung auch mehrere Leuchtmittel vorgesehen werden können, um für eine rundum gleichmäßige Lichtverteilung und Lichtabgabe zu sorgen.

Bei einer anderen vorteilhaften Ausgestaltung des Ladebordwandsystems dient als Leuchtmittel der Beleuchtungseinrichtung eine lichtemittierende Diode LED. Diese lichtemittierenden Dioden, die nahezu in allen Grundfarben verfügbar sind, sind im Gegensatz zu elektrischen Glühbirnen robuster und haben regelmäßig eine längere Lebensdauer, so daß sich für viele Anwendungszwecke auch diese anstelle der standardmäßig in Fahrzeugen vorhandenen elektrischen Glühbirnen anbieten. Die lichtemittierende Diode bzw. eine Mehrzahl lichtemittierender Dioden pro Beleuchtungseinrichtung kann auf einfache Weise in den kragenförmigen Befestigungsflansch integriert werden, so daß Maßnahmen zur Aufnahme von Fassungen, wie sie für elektrische Glühbirnen regelmäßig erforderlich sind, entfallen können. Der Platzbedarf bei hoher Lichtausbeute ist bei lichtemittierenden Dioden sehr gering.

Ein besonderes Problem stellt bei Ladebordwandsystemen der eingangs genannten Art die Verschmutzung der fußbedienbaren Schalteinrichtung dar. Es versteht sich von selbst, daß Ladebordwandsysteme dieser Art bei allen Wetterlagen benutzt werden und auch sicher benutzt werden können müssen. Auch ist es verständlich, daß die Schalteinrichtung demzufolge innerhalb kurzer Zeit stark verschmutzt, da sie bestimmungsgemäß mit dem Fuß bzw. den Füßen bedient werden muß. Um dennoch zu gewährleisten, daß die Schalteinrichtung immer bestimmungsgemäß gut erkennbar ist, ohne daß die Schalteinrichtung bzw. die Beleuchtungseinrichtung der Schalteinrichtung fortwährend gesäubert werden muß, ist es vorteilhaft, den Befestigungsflansch mit lichtfokussierenden Mitteln zu versehen, d.h. wenigstens teilweise prismatisch nach Art einer Fresnel-Linse auszubilden, so daß ein physikalisch erreichbares Lichtstrahlungsoptimum vom Befestigungsflansch erzeugt wird, wobei es aber auch möglich ist, lediglich die eigentliche Beleuchtungseinrichtung alternativ oder zusätzlich mit lichtfokussierenden Mitteln der vorbeschriebenen Art zu versehen.

Das Ladebordwandsystem unterliegt als technischer Gegenstand naturgemäß aufgrund seiner bestimmungsgemäß großen Beanspruchung im täglichen Dienst auch Betriebsstörungen, was gleichermaßen natürlich auch für die Schalteinrichtung bzw. die Beleuchtungseinrichtung der Schalteinrichtung des Ladebordwandsystems gilt. Zusätzlich zu diesen Betriebsstörungen hin bis zum Ausfall des Hebe- und Senkvermögens der Ladebordwand aufgrund des Ausfalls der elektrischen Versorgungsspannung beispielsweise für den Betrieb der hydraulischen Hubzylinder und ggf. der hydraulisch betriebenen Klappzylinder kann es auch vorkommen, daß die elektrische Vorsorgungsspannung des Leuchtmittels der Beleuchtungseinrichtung ausfällt. Um für diesen Fall auch noch eine gute Erkennbarkeit der Schalteinrichtung sowohl für die Bedienungsperson als auch für außenstehende Dritte zu haben, ist es vorteilhaft, den Befestigungsflansch wenigstens teilweise lumineszierend auszubilden. Auf diese Weise kann zumindest für eine bestimmte Zeit, die vergeht, das Ladebordwandsystem bei Störungen der voranbeschriebenen Art wiederum in völlige Funktionsfähigkeit zu versetzen, sichergestellt sein, daß sowohl die Bedienungsperson als auch Dritte den lumineszierend ausgebildeten Befestigungsflansch oder andere Elemente, die lumineszierend ausgebildet sind und sich in der Nähe oder an der Schalteinrichtung befinden, die Schalteinrichtung erkennen können. Grundsätzlich ist die Beleuchtungseinrichtung vorzugsweise in konstantem Lichtabgabemodus betreibbar, d.h. bei Ingangsetzen des Ladebordwandsystems gibt die Beleuchtungseinrichtung konstant Licht ab. Für bestimmte Anwendungsfälle, insbesondere um auch eine Warnwirkung verstärkter Art zu erzielen, kann es jedoch vorteilhaft sein, die Beleuchtungseinrichtung in getaktetem Lichtabgabemodus zu betreiben, beispielsweise wenn die Ladeplattform in Betrieb ist, d.h. angehoben oder abgesenkt wird.

Die Erfindung wird nun unter Bezugnahme auf die nachfolgenden schematischen Zeichnungen anhand eines Ausführungsbeispiels im einzelnen beschrieben. Darin zeigen:
- Fig. 1: in perspektivischer Darstellung ein Ladebordwandsystem mit einem Hub- und Klapptragwerk, das aus einem ersten und einem zweiten Tragwerk besteht und an dem auf bekannte Weise eine Ladebordwand angeordnet ist,
- Fig. 2: eine Ladebordwand, wie sie im Zusammenhang mit dem in Fig. 1 dargestellten Ladebordwandsystem verwendet wird, in annähernd realistischer Ausgestaltung mit vier Fußschaltern und zwei in den Ecken angeordneten rückwärts abstrahlenden Leucht- bzw. Warnmitteln und
- Fig. 3: einen Ausschnitt aus der Darstellung von Fig. 2 im Bereich der Befestigung der Schalteinrichtungen auf der Ladebordwand, wobei die Schalteinrichtung in typischer Weise ausgestaltet und hier in auseinandergezogener Darstellung unmittelbar vor der Montierung an der Ladebordwand dargestellt ist.

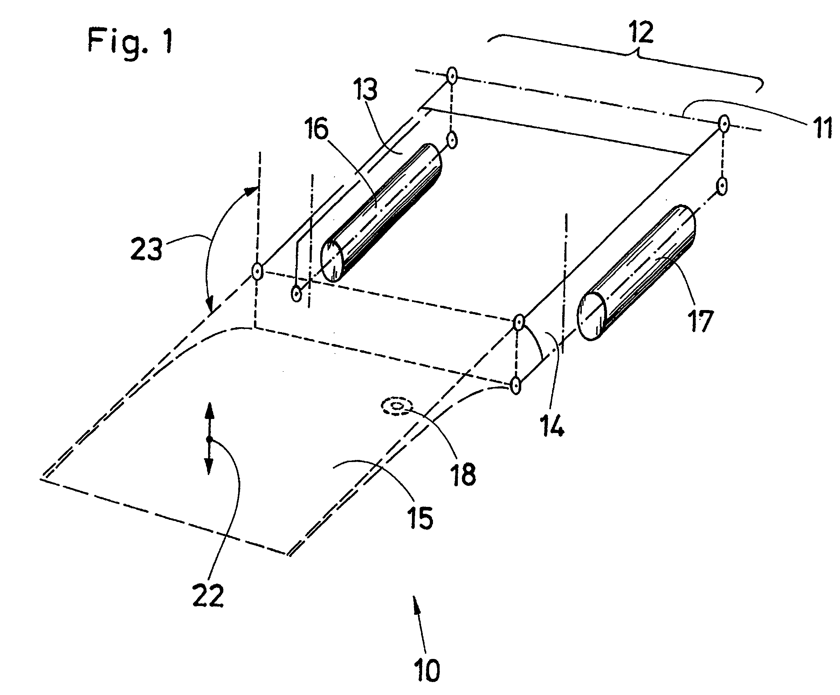

Das in Fig. 1 dargestellte Ladebordwandsystem 10 weist einen an sich für diese Systeme typischen Aufbau auf, so daß hier an dieser Stelle nur kurz allgemein auf dessen Funktion eingegangen wird. Ladebordwandsysteme 10 dieser Art umfassen regelmäßig im wesentlichen parallel voneinander beabstandete Tragwerke 13, 14, die ein gemeinsames Hub- und Klapptragwerk 12 bilden. An diesem Hubund Klapptragwerk 12 ist ebenfalls auf bekannte Weise eine im wesentlichen plattenförmige Ladebordwand 15 befestigt, die zum Heben und Absenken einer Last, hier nicht dargestellt, und zum Verschließen oder Begrenzen eines Stauraumes des Fahrzeugs 11, angedeutet durch strichpunktierte Linie, dient. Weiterhin umfaßt ein derartiges Hub- und Klapptragwerk 12 entweder eine oder zwei hydraulisch betriebene Hubzylindereinrichtungen 16, mit der bzw. mit denen ein Heben und Senken der Ladebordwand möglich ist, und eine oder zwei hydraulisch betriebene Klappzylindereinrichtungen 17, mit denen ein Verschwenken der Ladebordwand 15 von der Horizontalen in die Vertikale und umgekehrt möglich ist. Bei der in Fig. 1 dargestellten Ausführungsform des Ladebordwandsystems 10 umfaßt das Hub- und Klapptragwerk 12 jeweils nur eine Hubzylindereinrichtung 16 und eine Klappzylindereinrichtung 17, wobei es aber für das hier beschriebene Ladebordwandsystem nicht auf eine ein- oder mehrzylindrische Ausbildung der Hubzylindereinrichtung 16 und/oder der Klappzylindereinrichtung 17 ankommt. Mittels der Hubzylindereinrichtung 16 wird die Ladebordwand 15 dem Pfeil 22 entsprechend im wesentlichen horizontal verbleibend vertikal nach oben und nach unten bewegt, wohingegen mit der Klappzylindereinrichtung 17 ein Klappen von der Horizontalen in die Vertikale und umgekehrt, dem Pfeil 23 entsprechend, bewerkstelligt wird.

Die Hubzylindereinrichtung 16 und die Klappzylindereinrichtung 17 sind hydraulisch betreibbar, wobei das Hydraulikmittel über hier nicht dargestellte Verbindungsleitungen in die Hub- und Klappzylindereinrichtung 16, 17 eingeleitet bzw. von diesen weggeleitet werden kann. Der erforderliche Druck für die Betätigung der Hub- und Klappzylindereinrichtung 16, 17 wird regelmäßig mittels eines hier nicht dargestellten Elektromotors erzeugt, der auf geeignete Weise durch eine Bedienungsperson für die jeweilige Funktion des Hebens- und Senkens der Ladebordwand 15 bzw. des Klappens der Ladebordwand 15 über geeignete Steuermittel betätigt werden kann. Der Elektromotor treibt eine hier ebenfalls nicht dargestellte Hydraulikpumpe an, um so den nötigen Druck für die Hub- und Klappzylindereinrichtung 16, 17 zu erzeugen.

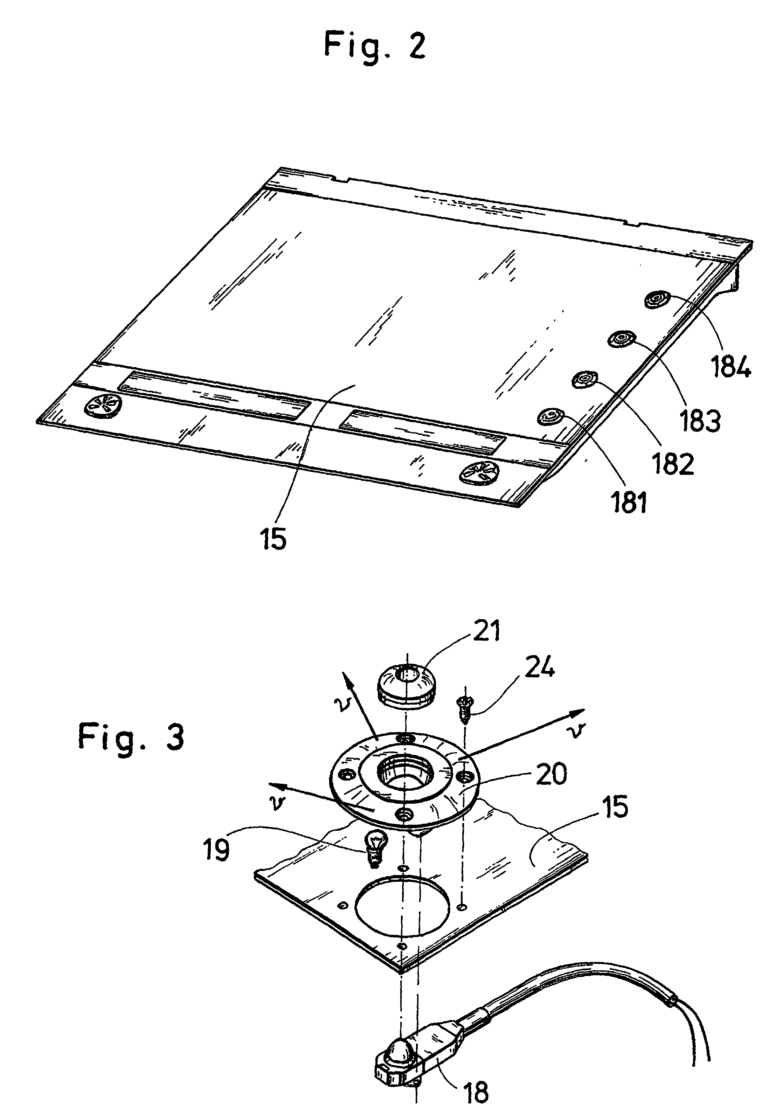

Auf der eigentlichen Ladebordwand 15, vgl. insbesondere die Fig. 2, ist eine Mehrzahl von Schalteinrichtungen 18_{1...4} angeordnet, mit der bzw. über die eine Bedienungsperson mittels ihrer Füße, auf der Ladebordwand 15 stehend, das Heben und Senken der Ladebordwand 15 auf vorbeschriebene Weise bewerkstelligen kann, um auf der Ladebordwand 15 befindliche Güter (nicht dargestellt) auf das Niveau der Ladeplattform des Fahrzeugs 11 zu heben bzw. von dort abzusenken auf das Niveau, auf dem das Fahrzeug 11 steht.

Die fußbedienbaren Schalteinrichtungen 18_{1...4}, im folgenden kurz Schalteinrichtung 18 genannt, da diese alle einen identischen Grundaufbau aufweisen, sind bzw. ist mit einer Beleuchtungseinrichtung 19 versehen, und zwar derart, daß diese über in dieser aufgenommene bzw. an dieser angeordnete Leuchtmittel, die elektrisch betrieben werden, die Schalteinrichtung 18 beleuchtet.

Bei der in den Figuren dargestellten Ausgestaltung des Ladebordwandsystems 10 ist die Schalteinrichtung 18 mit einem kragenförmigen Befestigungsflansch 20 versehen. Dieser Befestigungsflansch 20 ist konisch ausgebildet, so daß zwischen der Ladebordwand 15 und der Außenfläche des Befestigungsflansches 20 ein stumpfer Winkel gebildet wird. Der kragenförmige Befestigungsflansch 20 ist hier kreisförmig umlaufend ausgebildet. Zudem ist der Befestigungsflansch 20 aus lichttransparentem Werkstoff hergestellt, beispielsweise lichttransparentem Kunststoff oder auch aus geeignet ausgebildeten Glas. Durch die konische Ausbildung des Befestigungsflansches 20 im Querschnitt, d.h. dadurch, daß zwischen der Außenfläche des Befestigungsflansches 20 und der Ladebordwad 15 im befestigten Zustand der besagte stumpfe Winkel gebildet wird, kann bei eingeschalteter Beleuchtungseinrichtung 19 und geeignet abgegebenem Licht von der Beleuchtungseinrichtung 19 auf den Befestigungsflansch 20 dieser nicht nur vertikal von oben, d.h. von der Ladebordwand 15 unmittelbar über der Schalteinrichtung 18, von der Bedienungsperson gesehen werden, sondern auch von dritten Personen, die seitlich die Ladebordwand 15 im horizontal geklapptem Zustand betrachten. Als Leuchtmittel für die Beleuchtungseinrichtung kann eine Glühlampe bzw. können mehrere Glühlampen bekannter Art verwendet werden, es können aber auch als Leuchtmittel eine lichtemittierende Diode LED oder mehrere lichtemittierende Dioden LED pro Schalteinrichtung 18 verwendet werden. Die Verwendung einer oder mehrerer lichtemittierender Dioden gestattet deren Unterbringung unmittelbar in den wenigstens teilweise lichttransparenten Befestigungsflansch 20. Das Leuchtmittel bzw. die Leuchtmittel werden regelmäßig entweder von kraftfahrzeugeigenen elektrischen Bordnetz mit Spannung versorgt oder von dem elektrischen Netz, das das Ladebordwandsystem 10 versorgt.

Um bei Ausfall der elektrischen Spannungsversorgung zumindest für eine gewisse Zeit dafür zu sorgen, daß die Schalteinrichtung bestimmungs- und erfindungsgemäß noch sowohl von der Bedienungsperson als auch Dritten erkannt werden kann, d.h. zumindest auch im Bereich der Tagesdämmerung bzw. Dunkelheit, ist der Befestigungsflansch 20 wenigstens teilweise lumineszierend ausgebildet. Zudem kann der Befestigungsflansch 20 auch lichtfokussierende Mittel nach Art einer Fresnel-Linse aufweisen, um auch bei starker Verschmutzung der Schalteinrichtung 18 durch den täglichen rauhen Lade- und Entladebetrieb diese bei allen Wetterlagen noch erkennen zu können. Die Beleuchtungseinrichtung 19 selbst ist entweder in konstantem Lichtabgabemodus oder in getaktetem Lichtabgabemodus betreibbar. Es ist auch möglich, für den Vorgang des Hebens der Ladebordwand 15 und für den Vorgang des Senkens der Ladebordwand 15 unterschiedliche Lichtfarben zu verwenden bzw. einzuschalten, um dadurch nochmals Fehlbedienungen zu vermeiden bzw. die Bedienungsperson auf Fehlbedienungen der Ladebordwand 15 mittels der fußbedienbaren Schalteinrichtungen 18 hinzuweisen.

In Fig. 3 ist eine Schalteinrichtung 18 in auseinandergezogener Darstellung gezeigt, und zwar unmittelbar vor deren Montage an bzw. mit der Ladebordwand 15. Bei der eigentlichen Schalteinrichtung 18 handelt es sich um Schalter, wie sie für diese Zwecke schon seit längerer Zeit verwendet werden und wie sie dem Fachmann bekannt sind. Regelmäßig ist das eigentliche Schaltelement in der Schalteinrichtung 18 ein sogenannter Micro-Schalter. Der Micro-Schalter ist in der Schalteinrichtung 18 hermetisch gegen Feuchtigkeit, Staub und sonstige Umwelteinflüsse abgekapselt. Die Schalteinrichtung 18 wird mit dem Befestigungsflansch 20 über hier nicht gesondert dargestellte Schraubverbindungen befestigt, wenn der Befestigungsflansch 20 auf der Oberfläche der Ladebordwand 15 mittels der Schrauben 24, von den hier eine beispielhaft dargestellt ist, befestigt ist. Ein elastomeres Schaltorgan 21, was nach der Montage in den Befestigungsflansch 20 eingesetzt wird, überträgt die mit dem Fuß einer Bedienungsperson ausgeübte Kraft auf die Schalteinrichtung 18 zur Betätigung des darin aufgenommenen Schaltelements. Eine Beleuchtungseinrichtung 19, die hier lediglich aus Übersichtlichkeits- und Einfachheitsgründen in Form eines Leuchtmittels in Form einer Glühbirne dargestellt ist, ist am Befestigungsflansch 20 bzw. gegenüber dem Befestigungsflansch 20 derart angeordnet, daß bei eingeschalteter Beleuchtungseinrichtung 19 der Befestigungsflansch 20 beleuchtet wird und aufgrund seiner im Querschnitt konischen bzw. trapezförmigen Ausbildung kreisförmig um diesen herum Licht (nü) nach außen abgibt. Der Befestigungsflansch 20 dient somit als Lichtleiter und als Lichtabgabemittel. Die Beleuchtungseinrichtung 19 wird auf geeignete Weise im Befestigungsflansch 20 mittels hier nicht dargestellter Einrichtungen aufgenommen. Die elektrische Versorgungsspannung für die Beleuchtungseinrichtung 19 wird auf geeignete Weise von außen zugeführt und auf geeignete Weise ein- und ausgeschaltet.

### Bezugszeichenliste

- 10: Ladebordwandsystem
- 11: Fahrzeug
- 12: Hub- und Klapptragwerk
- 13: erstes Tragwerk
- 14: zweites Tragwerk
- 15: Ladebordwand
- 16: Hubzylindereinrichtung
- 17: Klappzylindereinrichtung
- 18: Schalteinrichtung
- 19: Beleuchtungseinrichtung
- 20: Befestigungsflansch
- 21: elastomeres Schaltorgan
- 22: Pfeil
- 23: Pfeil
- 24: Schraube

## Patentansprüche

1. Ladebordwandsystem zum Gebrauch an Fahrzeugen, insbesondere Lastkraftfahrzeugen, umfassend ein Hub- und Klapptragwerk, eine im wesentlichen plattenförmige Ladebordwand zum Heben und Absenken einer Last und ggf. zum Verschließen und/oder Begrenzen eines Stauraumes des Fahrzeuges und wenigstens eine Hubeinrichtung zum Heben und Senken der Ladebordwand sowie ggf. eine Einrichtung zum Verschwenken der Ladebordwand von der Horizontalen in die Vertikale und umgekehrt, wobei auf der Ladebordwand wenigstens eine fußbedienbare Schalteinrichtung zum Ein- und Ausschalten des Hebens und Senkens der Ladebordwand angeordnet ist, **dadurch gekennzeichnet, daß** die Schalteinrichtung (18) mit einer Beleuchtungseinrichtung (19) versehen ist.

2. Ladebordwandsystem nach Anspruch 1, **dadurch gekennzeichnet, daß** die Schalteinrichtung (18) einen kragenförmigen Befestigungsflansch (20) aufweist, mit dem die Schalteinrichtung (18) auf der Ladebordwand (15) befestigbar ist, wobei der Befestigungsflansch (20) wenigstens teilweise lichttransparent ausgebildet ist.

3. Ladebordwandsystem nach einem oder beiden der Ansprüche 1 oder 2, **dadurch gekennzeichnet, daß** als Leuchtmittel der Beleuchtungseinrichtung (19) eine elektrische Glühbirne dient.

4. Ladebordwandsystem nach einem oder beiden der Ansprüche 1 oder 2, **dadurch gekennzeichnet, daß** als Leuchtmittel der Beleuchtungseinrichtung (19) eine lichtemittierende Diode LED dient.

5. Ladebordwandsystem nach einem oder mehreren der Ansprüche 2 bis 4, **dadurch gekennzeichnet, daß** der Befestigungsflansch (20) lichtfokussierende Mittel aufweist.

6. Ladebordwandsystem nach einem oder mehreren der Ansprüche 2 bis 5, **dadurch gekennzeichnet, daß** der Befestigungsflansch (20) wenigstens teilweise lumineszierend ausgebildet ist.

7. Ladebordwandsystem nach einem oder mehreren der Ansprüche 1 bis 6, **dadurch gekennzeichnet, daß** die Beleuchtungseinrichtung (19) in konstantem Lichtabgabemodus betreibbar ist.

8. Ladebordwandsystem nach einem oder mehreren der Ansprüche 1 bis 6, **dadurch gekennzeichnet, daß** die Beleuchtungseinrichtung (19) in getaktetem Lichtabgabemodus betreibbar ist.

## Claims

1. Loading tailgate system for use on vehicles, in particular lorries, comprising a lifting and closing mechanism, a substantially plate-shaped loading platform for raising and lowering a load and optionally for closing off and/or delimiting a cargo space of the vehicle, and at least one lift mechanism for raising and lowering the loading tailgate and optionally a system for pivoting the loading tailgate from the horizontal into the vertical position and vice versa, at least one foot-operated control unit being arranged on the loading tailgate for starting and stopping the raising and lowering action of the loading tailgate, **characterised in that** the control unit (18) is provided with a lighting system (19).

2. Loading tailgate system as claimed in claim 1, **characterised in that** the control unit (18) has a collar-shaped mounting flange (20), by which the control unit (18) can be mounted on the loading tailgate (15), the mounting flange (20) being at least partially transparent to light.

3. Loading tailgate system as claimed in one or both of claims 1 or 2, **characterised in that** the lighting means of the lighting system (19) is an electric light bulb.

4. Loading tailgate system as claimed in one or both of claims 1 or 2, **characterised in that** the lighting means of the lighting system (19) is a light-emitting diode LED.

5. Loading tailgate system as claimed in one or more of claims 2 to 4, **characterised in that** the mounting flange (20) has light-focussing means.

6. Loading tailgate system as claimed in one or more of claims 2 to 5, **characterised in that** the mounting flange (20) is at least partially luminescent.

7. Loading tailgate system as claimed in one or more of claims 1 to 6, **characterised in that** the lighting system (19) may be operated in constant light-emitting mode.

8. Loading tailgate system as claimed in one or more of claims 1 to 6, **characterised in that** the lighting system (19) may be operated in timed light-emitting mode.

## Revendications

1. Système de hayon élévateur à utiliser sur des véhicules automobiles, en particulier des camions, comprenant un cadre de levage et de pivotement, un hayon élévateur, destiné à monter et abaisser une charge et, le cas échéant, à fermer et/ou à délimiter un compartiment de chargement du véhicule, et au moins un dispositif de levage destiné à monter et abaisser le hayon élévateur, ainsi que, le cas échéant, un dispositif destiné à faire pivoter le hayon élévateur d'un plan horizontal vers un plan vertical et inversement, dans lequel au moins une unité de commande à pied, destinée à activer et désactiver le levage et l'abaissement du hayon élévateur, est installée sur le hayon élévateur, **caractérisé en ce que** l'unité de commande (18) est munie d'une unité d'éclairage (19).

2. Système de hayon élévateur selon la revendication 1, **caractérisé en ce que** l'unité de commande (18) comporte une bride de fixation (20) en forme de collerette, par laquelle l'unité de commande (18) peut être fixée contre le hayon élévateur (15), la bride de fixation (20) laissant passer la lumière au moins en partie.

3. Système de hayon élévateur selon une ou les deux revendications 1 et 2, **caractérisé en ce que** le moyen d'éclairage de l'unité d'éclairage (19) est une ampoule électrique.

4. Système de hayon élévateur selon une ou les deux revendications 1 et 2, **caractérisé en ce que** le moyen d'éclairage de l'unité d'éclairage (19) est une diode électroluminescente DEL.

5. Système de hayon élévateur selon une ou plusieurs des revendications 2 à 4, **caractérisé en ce que** la bride de fixation (20) est munie de moyens focalisant la lumière.

6. Système de hayon élévateur selon une ou plusieurs des revendications 2 à 5, **caractérisé en ce que** la bride de fixation (20) est électroluminescente au moins en partie.

7. Système de hayon élévateur selon une ou plusieurs des revendications 1 à 6, **caractérisé en ce que** l'unité d'éclairage (19) peut être exploitée en mode d'émission de lumière constante.

8. Système de hayon élévateur selon une ou plusieurs des revendications 1 à 6, **caractérisé en ce que** l'unité d'éclairage (19) peut être exploitée en mode d'émission de lumière cadencée.
